(19) **Europäisches Patentamt / European Patent Office / Office européen des brevets**

(11) **EP 4 495 275 A1**

(12) **EUROPEAN PATENT APPLICATION**
published in accordance with Art. 153(4) EPC

(43) Date of publication:
**22.01.2025 Bulletin 2025/04**

(21) Application number: **23770818.5**

(22) Date of filing: **15.03.2023**

(51) International Patent Classification (IPC):
**C21D 8/12** (2006.01)     **H02K 15/02** (2025.01)
**C22C 38/00** (2006.01)     **C22C 38/60** (2006.01)
**H01F 1/147** (2006.01)     **H02K 1/02** (2006.01)
**H02K 1/04** (2006.01)

(52) Cooperative Patent Classification (CPC):
**C21D 8/12; C22C 38/00; C22C 38/60; H01F 1/147; H02K 1/02; H02K 1/04; H02K 15/02;** Y02P 10/20

(86) International application number:
**PCT/JP2023/009982**

(87) International publication number:
**WO 2023/176865 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 JP 2022039816**

(71) Applicant: NIPPON STEEL CORPORATION
Chiyoda-ku
Tokyo 100-8071 (JP)

(72) Inventors:
• YASHIKI, Hiroyoshi
  Tokyo 100-8071 (JP)
• NATORI, Yoshiaki
  Tokyo 100-8071 (JP)
• TAKEDA, Kazutoshi
  Tokyo 100-8071 (JP)
• TANAKA, Ichiro
  Tokyo 100-8071 (JP)
• HORI, Hiroki
  Tokyo 100-8071 (JP)

(74) Representative: **Vossius & Partner
Patentanwälte Rechtsanwälte mbB
Siebertstrasse 3
81675 München (DE)**

(54) **NON-ORIENTED ELECTROMAGNETIC STEEL SHEET, MOTOR CORE, AND METHODS FOR PRODUCING SAME**

(57)    Provided is a non-oriented electrical steel sheet including a base metal having a chemical composition containing, by mass %, C: 0.0050% or less, Si: more than 3.70% and 4.60% or less, Mn: more than 0.20% and 0.50% or less, Al: 0.23-0.75%, P: 0.030% or less, S: 0.0018% or less, N: 0.0040% or less, Sn: 0.005-0.040%, Sb: 0-0.040%, with a balance of Fe and impurities, and satisfying [$4.2 \leq Si+Al+0.5 \times Mn \leq 4.9$], wherein [N]s, an N content from a surface to 20 µm in depth of the base metal, is 0.0060% or less, an average crystal grain size of the base metal is 10 to 30 µm, an iron loss $W_{10/400}$ is 20.0 W/kg or less, a saturation magnetic flux density is 1.945T or more, a tensile strength is 680 MPa or more, and a sheet thickness is 0.10 to 0.30 mm.

# EP 4 495 275 A1

**Description**

TECHNICAL FIELD

The present invention relates to a non-oriented electrical steel sheet, a motor core, and methods for producing the same.

BACKGROUND ART

In recent years, global environmental issues have been attracting attention, and demands for energy conservation efforts have been increasing. In particular, there is a strong demand for more efficiency in electrical equipment. For this reason, there is a growing demand for improved magnetic properties in non-oriented electrical steel sheets, which are widely used as iron core materials for motors, generators, and the like. This is especially true for drive motors for electric and hybrid vehicles and motors for air conditioning compressors.

A motor core of various motors as described above consists of a stator, which is a stationary element, and a rotor, which is a moving element. The stator requires excellent magnetic properties (low iron loss and high magnetic density), especially low iron loss and high saturation magnetic flux density, while the rotor requires excellent mechanical properties.

Since characteristics required for the stator and the rotor are different, desired characteristics can be achieved by producing different types of non-oriented electrical steel sheets for the stator and the rotor. However, producing two types of non-oriented electrical steel sheets will result in a decrease in yield. Therefore, in order to achieve high strength required for rotors and low iron loss required for stators, non-oriented electrical steel sheets with excellent strength and magnetic properties have been studied in the past.

For example, attempts have been made to achieve excellent magnetic properties and high strength in Patent Documents 1 to 4.

LIST OF PRIOR ART DOCUMENTS

PATENT DOCUMENT

 Patent Document 1: WO 2019/017426
 Patent Document 2: WO 2020/091039
 Patent Document 3: WO 2020/091043
 Patent Document 4: JP2008-50686 A

SUMMARY OF INVENTION

TECHNICAL PROBLEM

However, in order to commercialize a non-oriented electrical steel sheet having both high strength and low iron loss, it is necessary to include a large amount of alloying elements, as disclosed in Patent Documents 1 to 4, which results in a decrease in toughness and a tendency to fracture during cold rolling. In addition, high alloying may cause a decrease in saturation magnetic flux density.

The present invention was made to solve these problems and an objective of the present invention is to provide a non-oriented electrical steel sheet with high strength and excellent magnetic properties in a stable manner.

SOLUTION TO PROBLEM

The gist of the present invention is the following non-oriented electrical steel sheet and motor core, and methods for producing the same.

 (1) A non-oriented electrical steel sheet including a base metal having a chemical composition containing, by mass %:

  C: 0.0050% or less,
  Si: more than 3.70% and 4.60% or less,
  Mn: more than 0.20% and 0.50% or less,

Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:

[N]s, an N content from a surface to 20 $\mu$m in depth of the base metal, is 0.0060% or less,
an average crystal grain size of the base metal is 10 to 30 $\mu$m,
an iron loss $W_{10/400}$ is 20.0 W/kg or less,
a saturation magnetic flux density is 1.945T or more,
a tensile strength is 680 MPa or more, and
a sheet thickness is 0.10 to 0.30 mm:

$$4.2 \leq Si + Al + 0.5 \times Mn \leq 4.9 \ldots\ldots (i)$$

where, element symbols in the above Formula (i) represents contents (by mass %) of each element.

(2) The non-oriented electrical steel sheet described in (1) above, wherein the steel sheet incudes an insulation coating on a surface of the base metal.

(3) A method for producing the non-oriented electrical steel sheet described in (1) or (2) above,
the method including:

a hot rolling process,
a pickling process,
a batch-type hot-band annealing process performed at a soaking temperature of 650 to 780°C for a soaking time of 8 to 36 hours,
a cold rolling process to reduce a sheet thickness to 0.10 to 0.30 mm, and
a final annealing process at a soaking temperature of 700 to 830°C for a soaking time of 1 second to 10 minutes,
wherein the hot rolling process, the pickling process, the hot-band annealing process, the cold rolling process, and the final-annealing process are sequentially performed on a steel ingot having a chemical composition containing, by mass %,
C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below:

$$4.2 \leq \mathrm{Si} + \mathrm{Al} + 0.5 \times \mathrm{Mn} \leq 4.9 \ \ldots\ldots\ (i)$$

where, element symbols in the above Formula (i) represents contents (by mass %) of each element.

(4) A motor core including a plurality of laminated non-oriented electrical steel sheets,

wherein the chemical composition of the base metal of the non-oriented electrical steel sheet containing, by mass %,
C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:
[N]s, an N content from a surface to 20 $\mu$m in depth of the base metal, is 0.0070% or less,
an average crystal grain size of the base metal is 50 to 120 $\mu$m,
a saturation magnetic flux density is 1.945 T or more,
a sheet thickness of the non-oriented electrical steel sheet is 0.10 to 0.30 mm:

$$4.2 \leq \mathrm{Si} + \mathrm{Al} + 0.5 \times \mathrm{Mn} \leq 4.9 \ \ldots\ldots\ (i)$$

where, element symbols in the above Formula (i) represents contents (by mass %) of each element.

(5) The motor core described in (4) above, wherein the non-oriented electrical steel sheet includes an insulation coating on a surface of the base metal of the non-oriented electrical steel sheet.
(6) A method for producing the motor core described in (4) or (5) above,
the method including:

a hot rolling process,
a pickling process,
a batch type hot-band annealing process performed at a soaking temperature of 650 to 780°C for a soaking time of 8 to 36 hours,
a cold rolling process to reduce the sheet thickness to 0.10 to 0.30 mm,
a final annealing process at a soaking temperature of 700 to 830°C for a soaking time of 1 second to 10 minutes,
a punching process,
a stacking process,
a stress relief annealing process at a soaking temperature of 750 to 900°C for 10 to 180 minutes,
wherein the hot rolling process, the pickling process, the hot-band annealing process, the cold rolling process, the final-annealing process, the punching process, the stacking process, and the stress relief annealing process are sequentially performed on a steel ingot having a chemical composition containing, by mass %,
C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,

N: 0.0040% or less,

Ti: less than 0.0050%,

Nb: less than 0.0050%,

Zr: less than 0.0050%,

V: less than 0.0050%,

Cu: less than 0.200%,

Ni: less than 0.500%,

Sn: 0.005 to 0.040%, and

Sb: 0 to 0.040%,

with a balance of Fe and impurities, and

satisfying the Formula (i) below:

$$4.2 \leq Si + Al + 0.5 \times Mn \leq 4.9 \ \ldots\ldots \ (i)$$

where, element symbols in the above Formula (i) represents contents (by mass %) of each element.

ADVANTAGEOUS EFFECT OF INVENTION

According to the present invention, a non-oriented electrical steel sheet having high strength and excellent magnetic properties can be obtained.

DESCRIPTION OF EMBODIMENTS

The present inventors have made the following findings as a result of the diligent study to solve the above problems.

In order to achieve high strength, low iron loss, and high saturation magnetic flux density while ensuring toughness during cold rolling, it is necessary to optimize the contents of Si, Mn, and Al, which are main alloying elements.

Specifically, Si, which has the highest solid solution strengthening ability and the highest contribution to an increase in electrical resistance, is to be contained at more than 3.70% and 4.60% or less. In addition, in order to obtain good crystal grain growth, Al is to be contained at 0.23% or more. On the other hand, the Al content is to be 0.75% or less to suppress deterioration of the saturation magnetic flux density. In addition, Mn, which has the lowest solid solution strengthening ability among the three elements but contributes to an increase in electrical resistance with little degradation in toughness, is to be contained at more than 0.20%.

The present inventors have studied and found that the iron loss deteriorates when a surface layer of the steel sheet is nitrided. Although the mechanism is not clear, it has been found that Mn affects nitriding of the surface layer of the steel sheet. In order to suppress deterioration of the iron loss due to the nitriding of the surface layer of the steel sheet, Mn content is to be 0.50% or less. In addition, it has been also found that Sn has an effect of suppressing the nitriding of the steel sheet surface layer. Therefore, Sn is to be contained at 0.005 to 0.040%.

In a general continuous hot-band annealing, a hot rolled steel sheet with scale is placed in an annealing furnace, which produces scale that is difficult to remove by pickling after annealing, requiring mechanical descaling such as shot blasting prior to pickling. However, for high-alloy steels such as those mentioned above, deformation twinning occurs on the surface of the steel sheet due to shot blasting, and the deformation twinning can easily lead to problems such as sheet fracture and edge cracking during cold rolling.

In the present invention, a hot rolled steel sheet is pickled before hot-band annealing, and then annealed in a batch-type furnace. Since the scale on the hot rolled steel sheet can be easily removed by pickling, no shot is required and no deformation twinning occurs. As a result, good toughness is ensured even in high-alloy steel, and occurrence of problems such as sheet fracture and edge cracking during cold rolling can be suppressed.

The present invention was made based on the above findings. Each requirement of the present invention is described in detail below.

1. Overall Configuration

The non-oriented electrical steel sheet of an embodiment according to the present invention is suitable for both stators and rotors due to high strength and excellent magnetic properties thereof.

In particular, when the non-oriented electrical steel sheet is used as a stator core, reduction of iron loss is emphasized. In such cases, it is preferable to produce motor cores by punching and stacking the above non-oriented electrical steel sheets and then subjecting only the stator core to stress relief annealing. The stator core that has undergone stress relief annealing has reduced iron loss due to crystal grain growth, which can significantly improve a motor efficiency.

A motor core according to an embodiment of the present invention is obtained by sequentially applying a punching process, a stacking process, and a stress relief annealing process to the above non-oriented electrical steel sheets. In other words, the motor core of an embodiment of the present invention is a laminate made of a plurality of non-oriented electrical steel sheets. In the following description, the base metal of the non-oriented electrical steel sheets constituting the motor core is simply referred to as the "motor core base metal."

In addition, the non-oriented electrical steel sheet and motor core according to the present embodiment is preferably provided with an insulation coating on a surface of the base metal described below.

2. Chemical Composition of Base Metal

The reasons for the limitation of each element are as follows. In the following explanation, "%" for content means "mass percent".

C: 0.0050% or less

C (carbon) is an element that deteriorates the iron loss of the non-oriented electrical steel sheet. The C content of more than 0.0050% deteriorates the iron loss of the non-oriented electrical steel sheet, and desirable magnetic properties cannot be obtained. Therefore, the C content is to be 0.0050% or less. The C content is preferably 0.0040% or less, more preferably 0.0035% or less, and even more preferably 0.0030% or less. Since C contributes to high strength of the non-oriented electrical steel sheet, the C content is preferably 0.0005% or more, and more preferably 0.0010% or more, when this effect is to be obtained.

Si: more than 3.70% and 4.60% or less

Si (silicon) is an element that increases the electrical resistance of steel to reduce an eddy current loss and improve a high-frequency iron loss of the non-oriented electrical steel sheet. Si is also an effective element for increasing the strength of the non-oriented electrical steel sheet due to its high solid solution strengthening ability. To achieve these effects, the Si content is to be more than 3.70%. The Si content is preferably 3.80% or more, more preferably 3.90% or more, and even more preferably 4.00% or more. On the other hand, if the Si content is excessive, workability deteriorates significantly, and it becomes difficult to perform cold rolling. Therefore, the Si content is to be 4.60% or less. The Si content is preferably 4.50% or less, more preferably 4.40% or less.

Mn: more than 0.20% and 0.50% or less

Mn (manganese) is an effective element to increase the electrical resistance of steel to reduce the eddy current loss and improve the high-frequency iron loss of the non-oriented electrical steel sheet. In addition, if the Mn content is too low, the effect of increasing the electrical resistance is small and the iron loss deteriorates due to the precipitation of fine sulfides (MnS) in the steel. Therefore, the Mn content is to be more than 0.20%. The Mn content is preferably 0.25% or more, and more preferably 0.30% or more. On the other hand, if the Mn content is excessive, the nitriding of the surface layer of the steel sheet becomes excessive and the iron loss deteriorates. Therefore, the Mn content is to be 0.50% or less. The Mn content is preferably 0.45%, and more preferably 0.40% or less.

Al: 0.23 to 0.75%

Al (aluminum) is an element that has an effect of reducing the eddy current loss by increasing the electrical resistance of steel and improving the high-frequency iron loss of the non-oriented electrical steel sheet. Al also has an effect of improving the iron loss by improving texture of the steel sheet. In addition, Al is an element that contributes to higher strength of the non-oriented electrical steel sheet through solid solution strengthening, although not to the same extent as Si. Furthermore, the addition of an appropriate amount of Al has an effect of suppressing refinement of AlN, which is caused by Al combining with N in the steel, improving crystal grain growth during final annealing and stress relief annealing, and suppressing the deterioration of iron loss caused by fine AlN itself.

To achieve these effects, the Al content is to be 0.23% or more. The Al content is preferably 0.25% or more, and more preferably 0.27% or more. The above-mentioned nitriding of the surface layer of the steel sheet is more likely to occur at a higher Al content. As a result, the iron loss deteriorates. However, in the present invention, the nitriding of the surface layer of the steel sheet can be suppressed even in the case of high Al content by controlling the contents of Mn and Sn. Therefore, the effect in the present invention is more exerted when the Al content is high. That is, the effect of the present invention is more exerted when the Al content is, for example, more than 0.45%, or 0.47% or more. On the other hand, when the Al content is excessive, the toughness deteriorates and a risk of fracture during cold rolling increases. Therefore, the Al content is to be 0.75% or less. The Al content is preferably 0.70% or less, and more preferably 0.65% or less.

In the present embodiment, the electrical resistance of the steel is ensured by appropriately controlling the contents of Si, Al, and Mn. It is also necessary to appropriately control the contents of Si, Al, and Mn from the viewpoint of ensuring strength. On the other hand, an upper limit is also necessary from the viewpoint of ensuring the saturation magnetic flux density and the toughness. Therefore, in addition to the contents of Si, Al, and Mn being within the above ranges, the following Formula (i) must be satisfied. The value of the middle part of the following Formula (i) is preferably 4.3 or more, and more preferably 4.4 or more; the value is preferably 4.8 or less, and more preferably 4.7 or less.

$$4.2 \leq \ Si + Al + 0.5 \times Mn \leq \ 4.9 \ \ldots\ldots \ (i)$$

Here, the element symbols in the above formula represent the contents (mass %) of each element.

P: 0.030% or less

P (phosphorus) is contained in steel as an impurity, and its excessive content significantly reduces the toughness of the non-oriented electrical steel sheet. Therefore, the P content is to be 0.030% or less. The P content is preferably 0.025% or less, and more preferably 0.020% or less. Since an extreme reduction of the P content may cause an increase in producing cost, the P content is preferably 0.003% or more, and more preferably 0.005% or more.

S: 0.0018% or less

S (sulfur) is an element that increases the iron loss by forming fine precipitates of MnS and degrades the magnetic properties of the non-oriented electrical steel sheet. Therefore, the S content is to be 0.0018% or less. The S content is preferably 0.0016% or less, and more preferably 0.0014% or less. Since an extreme reduction of the S content may cause an increase in producing cost, the S content is preferably 0.0001% or more, more preferably 0.0003% or more, and even more preferably 0.0005% or more.

N: 0.0040% or less

N (nitrogen) is an element unavoidably mixed in steel and forms nitrides, which increase the iron loss and degrade the magnetic properties of the non-oriented electrical steel sheet. Therefore, the N content is to be 0.0040% or less. The N content is preferably 0.0030% or less, and more preferably 0.0020% or less. Since an extreme reduction of the N content may cause an increase in producing cost, it is preferable that the N content be 0.0005% or more.

Ti: less than 0.0050%

Ti (titanium) is an element contained unavoidably in steel and can combine with carbon or nitrogen to form precipitates (carbides and nitrides). If carbides or nitrides are formed, these precipitates themselves degrade the magnetic properties of the non-oriented electrical steel sheet. In addition, they impair crystal grain growth during final annealing and stress relief annealing, thereby degrading the magnetic properties of the non-oriented electrical steel sheet. Therefore, the Ti content is to be less than 0.0050%. The Ti content is preferably 0.0040% or less, more preferably 0.0030% or less, and even more preferably 0.0020% or less. Since an extreme reduction of the Ti content may cause an increase in producing cost, it is preferable that the Ti content be 0.0005% or more.

Nb: less than 0.0050%

Nb (niobium) is an element that contributes to high strength by combining with carbon or nitrogen to form precipitates (carbides and nitrides), but these precipitates themselves degrade the magnetic properties of the non-oriented electrical steel sheet. Therefore, the Nb content is to be less than 0.0050%. The Nb content is preferably 0.0040% or less, more preferably 0.0030% or less, and even more preferably 0.0020% or less. Since an extreme reduction of the Nb content may cause an increase in producing cost, it is preferable that the Nb content be 0.0001% or more.

Zr: less than 0.0050%

Zr (zirconium) is an element that contributes to high strength by combining with carbon or nitrogen to form precipitates (carbides and nitrides), but these precipitates themselves degrade the magnetic properties of the non-oriented electrical steel sheet. Therefore, the Zr content is to be less than 0.0050%. The Zr content is preferably 0.0040% or less, more preferably 0.0030% or less, and even more preferably 0.0020% or less. Since an extreme reduction of the Zr content may cause an increase in producing cost, it is preferable that the Zr content be 0.0001% or more.

V: less than 0.0050%

V (vanadium) is an element that contributes to high strength by combining with carbon or nitrogen to form precipitates (carbides and nitrides), but these precipitates themselves degrade the magnetic properties of the non-oriented electrical steel sheet. Therefore, the V content is to be less than 0.0050%. The V content is preferably 0.0040% or less, more preferably 0.0030% or less, and even more preferably 0.0020%. Since an extreme reduction of the V content may cause an increase in producing cost, it is preferable that the V content be 0.0001% or more.

Cu: less than 0.200%

Cu (copper) is an element that is mixed into steel unavoidably. Intentional inclusion of Cu increases the producing cost of the non-oriented electrical steel sheet. Therefore, in the present embodiment, Cu does not need to be actively included, and may be included at an impurity level. The Cu content is to be less than 0.200% or less, which is a maximum value that may be unavoidably mixed in a producing process. The Cu content is preferably 0.150% or less, and more preferably 0.100% or less. The lower limit of the Cu content is not particularly limited, but an extreme reduction of the Cu content may cause an increase in producing cost. Therefore, the Cu content is preferably 0.001% or more, more preferably 0.003% or more, and even more preferably 0.005% or more.

Ni: less than 0.500%

Ni (nickel) is an element that is mixed in steel unavoidably. However, since Ni is also an element that improves the strength of the non-oriented electrical steel sheet, it may be intentionally included. However, since Ni is expensive, the Ni content is to be less than 0.500%. The Ni content is preferably 0.400% or less, and more preferably 0.300% or less. The lower limit of Ni content is not particularly limited, but an extreme reduction of the Ni content may cause an increase in producing cost. Therefore, the Ni content is preferably 0.001% or more, more preferably 0.003% or more, and even more preferably 0.005% or more. In the case of intentional inclusion, the Ni content is preferably 0.200% or more.

Sn: 0.005 to 0.040%

Sn (tin) is an element useful for ensuring low iron loss in the non-oriented electrical steel sheet by segregating on the surface of the base metal and suppressing oxidation and nitriding during annealing. Sn also has an effect of increasing the magnetic flux density of the non-oriented steel sheet by segregating at grain boundaries and improving the texture. To obtain these effects, the Sn content is to be 0.005% or more. The Sn content is preferably 0.010% or more, and more preferably 0.015% or more. On the other hand, if the Sn content is excessive, the toughness of the steel decreases and cold rolling becomes difficult. Therefore, the Sn content is to be less than 0.040%. The Sn content is preferably less than 0.035%, and more preferably less than 0.030%.

Sb: 0 to 0.040%.

Sb (antimony), like Sn, segregates on the surface of the base metal and suppresses the oxidation and nitriding during annealing, and is a useful element for ensuring low iron loss in the non-oriented electrical steel sheet. Sb also has the effect of increasing the magnetic flux density of the non-oriented electrical steel sheet by segregating in the grain boundaries and improving the texture. Therefore, Sb may be included as required. However, an excessive Sb content may reduce the toughness of steel and make cold rolling difficult. Therefore, the Sb content is to be 0.040% or less. The Sb content is preferably 0.030% or less. To ensure the above effects, the Sb content is preferably 0.005% or more, and more preferably 0.010% or more.

In the chemical composition of the base metal of the non-oriented electrical steel sheet according to the present invention, the balance is Fe and impurities. The term "impurities" herein means the components that are mixed in during the industrial manufacture of steel due to various factors in the raw materials and the producing process, such as ores, scrap, and other raw materials, and which are acceptable to the extent that they do not adversely affect the present invention.

Note that the contents of Cr and Mo as impurity elements is not specified. In the non-oriented electrical steel sheet and motor core of the present embodiment, the contents of these elements in a range of 0.5% or less, respectively, do not particularly affect the properties of the non-oriented electrical steel sheet and motor core of the present embodiment. Ca and Mg contained in a range of 0.002% or less do not particularly affect the properties of the non-oriented electrical steel sheet and motor core of the present embodiment. Even if rare earth elements (REM) are contained in a range of 0.004% or less, there is no particular effect on the properties of the non-oriented electrical steel sheet and motor core of the present embodiment. In the present embodiment, REM refers to a total of 17 elements consisting of Sc, Y, and lanthanides, and the above REM content refers to the total content of these elements.

O (oxygen) is also an impurity element, but the inclusion thereof in a range of 0.035% or less does not affect the properties of the non-oriented electrical steel sheet and motor core of the present embodiment. Since O may be mixed into the steel in the annealing process, the O content of 0.010% or less at the slab stage (i.e., ladle value) does not particularly affect the properties of the non-oriented electrical steel sheet and motor core of the present embodiment.

In addition to the above elements, elements such as Pb, Bi, As, B, and Se may be included as impurity elements, and if the content of each is within a range of 0.0050% or less, the characteristics of the non-oriented electrical steel sheet and motor core of the present embodiment are not impaired.

Various known methods are available for the measurement of the chemical composition of the base metal of the non-oriented electrical steel sheet or the motor core base metal of the present embodiment. For example, it can be measured by, for example, ICP optical emission spectrometry, gravimetric analysis, or spark discharge optical emission spectrometry. C and S can be measured by infrared absorption method after combustion, N by inert gas fusion thermal conductivity method, and O by inert gas fusion non-dispersive infrared absorption method.

Furthermore, in the non-oriented electrical steel sheet of the present embodiment, [N]s denoting an N content from the surface of the base metal to 20 $\mu$m in a depth direction is to be 0.0060% or less from the viewpoint of suppressing the nitriding of the surface layer of the steel sheet. If the [N]s is 0.0060% or less, it is possible to suppress the deterioration of iron loss. The [N]s is preferably 0.0055% or less, and more preferably 0.0050% or less.

On the other hand, in the motor core of the present embodiment, the nitriding is more advanced because the above-mentioned non-oriented electrical steel sheet is further subjected to stress relief annealing. However, in order to suppress the iron loss deterioration, the [N]s in the motor core of the present embodiment is to be 0.0070% or less. The [N]s in the above motor core is preferably 0.0065% or less, and more preferably 0.0060% or less.

Note that [N]s denoting an N content from the surface of the base metal of the non-oriented electrical steel sheet or the motor core base metal to 20 $\mu$m in the depth direction is measured by the following procedure. First, $[N]_1$ denoting the N content of the base metal of the non-oriented electrical steel sheet or the motor core base metal from which the insulation coating has been removed by a heated alkaline solution is measured. Then, both surfaces of the base metal of the non-oriented electrical steel sheet or the motor core base metal are removed by chemical polishing to 20 $\mu$m each, and $[N]_2$ denoting an N content of a sample after removal is measured. Then, from the measured $[N]_1$ and $[N]_2$ and the sheet thickness t ($\mu$m) of the non-oriented electrical steel sheet or the motor core base metal, the [N]s is obtained by the following formula.

$$[N]s = (t \times [N]_1 - (t-40) \times [N]_2)/40$$

3. Crystal Grain Size

In the non-oriented electrical steel sheet according to the present embodiment, an average crystal grain size of the base metal is to be 10 to 30 $\mu$m. By setting the average crystal grain size of the base metal of the non-oriented electrical steel sheet to 10 $\mu$m or more, it is possible to minimize the deterioration of hysteresis loss and improve the magnetic properties. On the other hand, by setting the average crystal grain size to 30 $\mu$m or less, the effect of improving the strength of the steel is noticeable. When the magnetic properties are important, the average crystal grain size is preferably 15 $\mu$m or more, and more preferably 20 $\mu$m or more. On the other hand, when the strength is important, the average crystal grain size is preferably 25 $\mu$m or less, and more preferably 20 $\mu$m or less.

In the motor core of the present embodiment, the average crystal grain size of the base metal is 50 to 120 $\mu$m. By setting the average crystal grain size of the motor core base metal to 50 $\mu$m or more, it is possible to suppress the deterioration of hysteresis loss and improve the magnetic properties. On the other hand, by setting the average crystal grain size to 120 $\mu$m or less, the deterioration of iron loss due to increased eddy current loss can be suppressed. The average crystal grain size is preferably 60 $\mu$m or more, and more preferably 70 $\mu$m or more. The average crystal grain size is preferably 110 $\mu$m or less, and more preferably 100 $\mu$m or less.

In the present invention, the average crystal grain size of the base metal of the non-oriented electrical steel sheet and that of the motor core base metal are to be determined according to JIS G 0551: 2013 "Steel - Microscopic test method for crystal grain size".

## 4. Magnetic Properties

In the non-oriented electrical steel sheet and motor core according to the present embodiment, the term "excellent magnetic properties" means that the iron loss $W_{10/400}$ is low and the saturation magnetic flux density Bs is high.

Here, the iron loss $W_{10/400}$ means the iron loss generated under the conditions that the maximum magnetic flux density is 1.0 T and the frequency is 400 Hz, and shall be measured by the Epstein method specified in JIS C 2550-1: 2011.

In the non-oriented electrical steel sheet of the present embodiment, the iron loss $W_{10/400}$ is 20.0 W/kg or less. On the other hand, in the motor core of the present embodiment, the iron loss is reduced more by stress relief annealing, and the term "low iron loss $W_{10/400}$" means 13.5 W/kg or less for a sheet thickness of 0.26 mm or more, 11.5 W/kg or less for a sheet thickness of 0.21 to 0.25 mm, and 10.0 W/kg or less for a sheet thickness of 0.20 mm or less.

It is not possible to collect large test specimens such as Epstein test specimens from the motor core. To evaluate the iron loss of a motor core, a laminated iron core is separated into steel sheets, and a small single sheet magnetic measurement test piece with dimensions that can be collected corresponding to the size of the separated steel sheet is made by electrical discharge machining. Then, the iron loss value is measured using a small single sheet tester corresponding to the above small test specimen. In this case, the measurement principle follows the "Methods of measurement of the magnetic properties of electrical steel strip and sheet by means of a single sheet tester" (Single Sheet Tester: SST) specified in JIS C 2556:2015.

The above-mentioned Epstein test specimens and small test specimens are collected in advance from various types of non-oriented electrical steel sheets, and the iron loss values are measured by the Epstein method and the single sheet magnetic property measurement method, and a conversion formula is derived from the relationship between the two measured values. Then, the iron loss value measured by single sheet tester is corrected to be equivalent to the iron loss value measured by the Epstein method using the above conversion formula.

In addition, the saturation magnetic flux density Bs is measured by vibrating sample magnetometer (VSM). In the non-oriented electrical steel sheet of the present embodiment, the saturation magnetic flux density Bs is 1.945 T or more. In the motor core of the present embodiment, the saturation magnetic flux density Bs is 1.945T or more.

## 5. Mechanical Properties

The non-oriented electrical steel sheet of the present embodiment has high strength; specifically, the tensile strength is 680 MPa or more. The tensile strength is preferably 690 MPa or more, and more preferably 700 MPa or more. Here, the tensile strength is to be measured by conducting a tensile test according to JIS Z 2241:2011.

## 6. Sheet Thickness

In the non-oriented electrical steel sheet according to the present embodiment and the non-oriented electrical steel sheets constituting the motor core according to the present embodiment, the sheet thickness is to be 0.10 mm or more from the viewpoint of the producing cost of cold rolling and final annealing. On the other hand, from the viewpoint of iron loss reduction, the sheet thickness is to be 0.30 mm or less. Therefore, the thickness of the non-oriented electrical steel sheet of the present embodiment or the sheets constituting the motor core of the present embodiment is 0.10 to 0.30 mm.

The effect of the nitriding of the surface layer of the steel sheet becomes more pronounced the thinner the sheet thickness is. In other words, if the nitriding of the surface layer of the steel sheet is not suppressed, the thinner the sheet thickness, the more deteriorated the iron loss. However, since the present invention suppresses the nitriding of the surface layer of the steel sheet, the deterioration of iron loss can be suppressed even when the sheet thickness is thin. Therefore, when the sheet thickness is, for example, less than 0.25 mm or 0.20 mm or less, the effect of the present invention is more exerted.

## 7.Insulation Coating

In the non-oriented electrical steel sheet and motor core according to the present embodiment, it is preferable to have an insulation coating on the surface of the base metal. Since the non-oriented electrical steel sheets are stacked after the core blanks are punched and then used, the eddy currents between the sheets and the eddy current loss as a core can be reduced by providing the surface of the base metal with an insulation coating.

The type of insulation coating is not particularly limited, and any known insulation coating used as an insulation coating for non-oriented electrical steel sheets can be used. For example, a composite insulation coating consisting mainly of an inorganic component and also containing an organic component can be mentioned. Here, the composite insulation coating is, for example, an insulation coating mainly including at least one of metal chromate, metal phosphate, or other inorganic components such as colloidal silica, Zr compounds, and Ti compounds, in which fine organic resin particles are dispersed. In particular, from the viewpoint of reducing environmental impacts during producing, which has become increasingly necessary in recent years, insulation coatings using metal phosphates, Zr or Ti coupling agents, or their carbonates or ammonium salts as starting materials are preferably used.

The coating amount of the insulation coating is not particularly limited, but it is preferably about 200 to 1500 mg/m$^2$ per side, for example, and more preferably 300 to 1200 mg/m$^2$ per side. By forming the insulation coating so that the coating amount is within the above range, it is possible to maintain excellent uniformity. In addition, when the coating amount of the insulating coating is measured afterwards, various known measurement methods can be used. For example, a method using the difference in mass before and after immersion in a sodium hydroxide solution or an X-ray fluorescence method using a calibration curve method can be used as appropriate.

8. Producing Method

The non-oriented electrical steel sheet of the present embodiment can be produced by performing a hot rolling process, a pickling process, a batch-type hot-band annealing process, a cold rolling process, and a final annealing process in order under the conditions shown below for a steel ingot having the chemical composition described above. In the case of forming an insulation coating on the surface of the base metal, an insulation coating forming process is performed after the final annealing process described above. Each process is described in detail below.

<Hot Rolling Process>

A steel ingot (slab) having the above chemical composition is heated, and hot rolling is performed on the heated steel ingot to obtain a hot rolled sheet. The heating temperature of the steel ingot for hot rolling is not specified, but for example, 1050 to 1250°C is preferred. The thickness of the hot rolled sheet after hot rolling is also not specified, but is preferably 1.5 to 3.0 mm, for example, taking into account a final thickness of the base metal.

<Pickling Process>

The above hot rolled sheet is pickled to remove a scale layer formed on the surface of the base metal. The pickling conditions such as acid concentration, accelerator concentration, and temperature of pickling solution are not limited and can be any known pickling conditions.

<Batch-Type Hot-Band Annealing Process>

Hot-band annealing is then performed to reduce the iron loss of the steel sheet. Hot-band annealing is performed using a batch-type annealing furnace with a soaking temperature of 650 to 780°C and a soaking time of 8 to 36 hours. By setting the soaking time to 8 hours or more, the metallurgical structure is sufficiently homogenized and the precipitates are coarsened, so that sufficient improvement in the iron loss can be achieved. On the other hand, if the soaking temperature exceeds 780°C or the soaking time exceeds 36 hours, the crystal grain size becomes excessively coarsened and the toughness decreases, resulting in fracture during cold rolling.

The atmosphere in the batch-type annealing furnace is non-oxidizing and can be a mixture of $H_2$ and $N_2$ with a ratio of 1 to 100 volume % $H_2$ (i.e., $H_2 + N_2 = 100$ volume %). Even in an atmosphere containing $N_2$, the nitriding of the base metal surface layer can be suppressed if the Mn and Sn contents are appropriate. However, from the viewpoint of more reliable suppression of the nitriding, it is preferable to use an atmosphere containing 100 volume % $H_2$.

<Cold Rolling Process>

The steel sheet that has undergone the above hot-band annealing is subjected to cold rolling. In cold rolling, the steel sheet is rolled at a reduction ratio such that the final thickness of the base metal is 0.10 to 0.30 mm.

<Final Annealing Process>

After the above cold rolling, the steel sheet is subjected to final annealing. In the method of producing non-oriented electrical steel sheets according to the present embodiment, it is preferable to use a continuous annealing furnace for the final annealing. The final annealing is performed under the condition of a soaking temperature of 700 to 830°C and a soaking time of 1 second to 10 minutes. Preferably, the atmosphere is a mixture of $H_2$ and $N_2$ with a ratio of 1 to 100 volume % $H_2$ (i.e., $H_2 + N_2 = 100$ volume %) and a dew point of -50 to +10°C.

If the soaking temperature is lower than 700°C, the crystal grain size becomes finer and non-recrystallized structures increase, resulting in a significant deterioration of iron loss, which is undesirable, and if the soaking temperature exceeds 830°C, the strength becomes insufficient, which is undesirable. If the soaking time is less than 1 second, dislocation density cannot be sufficiently reduced. On the other hand, if the soaking time exceeds 10 minutes, producing cost will increase.

<Insulation Coating Formation Process>

After the above final annealing described above, an insulation coating forming process is carried out as required. The method of forming an insulation coating is not particularly limited; using the known insulation coating treatment solutions as shown below, the solution can be applied and dried by known methods. As an example of the known insulation coatings, a composite insulation coating composed mainly of an inorganic component and also containing an organic component can be mentioned.

The composite insulation coating is, for example, an insulation coating mainly including at least one of metal chromate, metal phosphate, or other inorganic components such as colloidal silica, Zr compounds, and Ti compounds, in which fine organic resin particles are dispersed. In particular, from the viewpoint of reducing the environmental impacts during producing, which has been an increasing need in recent years, insulation coatings using metal phosphates, Zr or Ti coupling agents as starting materials, or insulation coatings using carbonate or ammonium salts of metal phosphate salts, Zr or Ti coupling agents as starting materials are preferably used.

The surface of the base metal on which the insulation coating is to be formed may be subjected to any pre-treatment, such as degreasing with alkali or pickling with hydrochloric acid, sulfuric acid, or phosphoric acid, prior to the application of a treatment solution. The surface of the final annealed base metal can be coated with the treatment solution even without these pretreatments.

Furthermore, with respect to the motor core of the present embodiment, although the producing method is not particularly restricted, it is possible to produce the motor core by, for example, sequentially performing a punching process, a stacking process, and a stress relief annealing process under the conditions shown below on the non-oriented electrical steel sheet obtained through the above-mentioned processes. As mentioned above, when the non-oriented electrical steel sheet is used as a stator core, where low iron loss is important, it is preferable to perform the stress relief annealing described below. Therefore, it is preferable for the motor core of the present embodiment to be a stator core. Each process is described in detail below.

<Punching Process>

The non-oriented electrical steel sheet obtained as described above is punched to form materials for the rotor core or stator core. There are no restrictions on the punching conditions, and general methods can be used.

<Stacking Process>

A plurality of non-oriented electrical steel sheets that have undergone the punching process are stacked to form a motor core.

<Stress Relief Annealing Process>

Stress relief annealing is performed on the motor core. A motor core that has undergone stress relief annealing reduces the iron loss and can significantly improve the motor efficiency by promoting recrystallization and crystal grain growth.

In the producing method for motor cores according to the present embodiment, stress relief annealing is performed under the conditions of a soaking temperature of 750 to 900°C and a soaking time of 10 to 180 minutes. If the $N_2$ proportion in the atmosphere is less than 70 volume %, the cost of stress relief annealing will increase, which is undesirable. The $N_2$ proportion in the atmosphere is more preferably 80 volume % or more, even more preferably 90 to 100 volume %, and especially 97 to 100 volume %. The atmospheric gas other than $N_2$ is not specified, but is generally a reducing mixed gas consisting of hydrogen, carbon dioxide, carbon monoxide, water vapor, methane, etc. Such a gas is usually produced by burning propane or natural gas. The dew point of the atmosphere is preferably -50 to +10°C.

The present invention will be described more specifically by means of examples below, but the present invention is not limited to these examples.

EXAMPLE

Slabs having the chemical compositions shown in Table 1 were heated to 1150°C, hot rolled to a finishing thickness of 2.0mm at a finishing temperature of 850°C and coiled at 600°C to make hot rolled steel sheets. After pickling to remove scale, the obtained hot rolled steel sheets were subjected to hot-band annealing in a batch-type annealing furnace at the soaking temperatures shown in Table 2 for a soaking time of 10 hours. The steel sheets thus obtained were cold rolled to a thickness of 0.20 mm. In addition, the steel sheets were final annealed in a mixed atmosphere of $H_2$: 15%, $N_2$: 85% with a dew point of -30°C for a soaking time of 20 seconds at the soaking temperatures shown in Table 2. After final annealing, the steel sheets were coated with an insulation coating consisting of aluminum phosphate and acrylic-styrene copolymer resin emulsion with a particle size of 0.2 μm and baked at 350°C in air.

In addition, the obtained non-oriented electrical steel sheets were subjected to stress relief annealing under soaking conditions at 800°C × 120 min in a nitrogen atmosphere with a dew point of -40°C (the ratio of nitrogen in the atmosphere was 99.9 % by volume or more).

[Table 1]

Table 1

| Steel | Chemical composition (mass%, balance: Fe and impurities) | | | | | | | | | | | | | | | Middle part value of Formula (i)† |
|---|---|---|---|---|---|---|---|---|---|---|---|---|---|---|---|---|
| | C | Si | Mn | P | S | Al | N | Ti | Nb | Zr | V | Cu | Ni | Sn | Sb | |
| A | 0.0025 | 3.80 | 0.15 | 0.014 | 0.0015 | 0.30 | 0.0014 | 0.0012 | 0.0006 | 0.0007 | 0.0002 | 0.029 | 0.018 | 0.031 | tr. | 4.2 |
| B | 0.0026 | 3.80 | 0.25 | 0.015 | 0.0015 | 0.30 | 0.0015 | 0.0013 | 0.0008 | 0.0007 | 0.0016 | 0.030 | 0.020 | 0.030 | tr. | 4.2 |
| C | 0.0020 | 3.90 | 0.35 | 0.013 | 0.0015 | 0.25 | 0.0015 | 0.0012 | 0.0009 | 0.0006 | 0.0005 | 0.031 | 0.035 | 0.029 | 0.002 | 4.3 |
| D | 0.0021 | 3.90 | 0.35 | 0.012 | 0.0019 | 0.25 | 0.0014 | 0.0013 | 0.0007 | 0.0004 | tr. | 0.028 | 0.034 | 0.030 | 0.003 | 4.3 |
| E | 0.0018 | 3.86 | 0.42 | 0.013 | 0.0004 | 0.51 | 0.0013 | 0.0016 | 0.0006 | 0.0004 | 0.0006 | 0.022 | 0.019 | 0.003 | tr. | 4.6 |
| F | 0.0022 | 3.87 | 0.43 | 0.015 | 0.0004 | 0.52 | 0.0015 | 0.0015 | 0.0007 | 0.0011 | 0.0009 | 0.007 | 0.019 | 0.006 | 0.013 | 4.6 |
| G | 0.0029 | 4.20 | 0.30 | 0.015 | 0.0005 | 0.40 | 0.0017 | 0.0010 | 0.0014 | 0.0006 | 0.0009 | 0.009 | 0.005 | 0.035 | 0.004 | 4.8 |
| H | 0.0024 | 4.20 | 0.30 | 0.014 | 0.0005 | 0.40 | 0.0010 | 0.0012 | 0.0016 | 0.0006 | 0.0009 | 0.005 | 0.005 | 0.046 | 0.003 | 4.8 |
| I | 0.0023 | 4.11 | 0.45 | 0.020 | 0.0005 | 0.36 | 0.0010 | 0.0014 | 0.0014 | 0.0005 | tr. | 0.006 | 0.006 | 0.010 | 0.001 | 4.7 |
| J | 0.0025 | 4.10 | 0.55 | 0.019 | 0.0005 | 0.38 | 0.0017 | 0.0014 | 0.0015 | 0.0004 | tr. | 0.006 | 0.006 | 0.007 | 0.001 | 4.8 |
| K | 0.0036 | 4.50 | 0.26 | 0.008 | 0.0010 | 0.25 | 0.0008 | 0.0007 | 0.0004 | 0.0005 | 0.0006 | 0.005 | 0.011 | 0.010 | 0.001 | 4.9 |
| L | 0.0026 | 4.50 | 0.36 | 0.008 | 0.0010 | 0.35 | 0.0015 | 0.0012 | 0.0006 | tr. | 0.0006 | 0.005 | 0.013 | 0.010 | 0.001 | 5.0 |
| M | 0.0020 | 4.72 | 0.30 | 0.012 | 0.0010 | 0.30 | 0.0013 | 0.0012 | 0.0006 | tr. | 0.0006 | 0.006 | 0.018 | 0.010 | 0.005 | 5.2 |
| N | 0.0016 | 4.02 | 0.30 | 0.016 | 0.0011 | 0.33 | 0.0012 | 0.0017 | 0.0006 | 0.0005 | 0.0004 | 0.012 | 0.018 | 0.030 | 0.005 | 4.5 |
| O | 0.0028 | 3.93 | 0.39 | 0.018 | 0.0006 | 0.29 | 0.0014 | 0.0014 | 0.0005 | 0.0005 | 0.0003 | 0.013 | 0.019 | 0.010 | 0.004 | 4.4 |
| P | 0.0025 | 3.70 | 0.30 | 0.015 | 0.0008 | 0.35 | 0.0012 | 0.0013 | 0.0005 | 0.0005 | 0.0003 | 0.012 | 0.021 | 0.026 | 0.003 | 4.2 |
| Q | 0.0030 | 3.80 | 0.21 | 0.016 | 0.0008 | 0.23 | 0.0014 | 0.0014 | 0.0008 | 0.0007 | 0.0005 | 0.014 | 0.022 | 0.026 | 0.002 | 4.1 |
| R | 0.0029 | 3.95 | 0.23 | 0.016 | 0.0010 | 0.20 | 0.0015 | 0.0012 | 0.0008 | 0.0007 | 0.0005 | 0.012 | 0.018 | 0.035 | 0.003 | 4.3 |
| S | 0.0010 | 3.78 | 0.25 | 0.025 | 0.0010 | 0.48 | 0.0018 | 0.0013 | 0.0010 | 0.0046 | 0.0041 | 0.019 | 0.016 | 0.018 | 0.008 | 4.4 |
| T | 0.0032 | 3.80 | 0.32 | 0.009 | 0.0010 | 0.69 | 0.0020 | 0.0010 | 0.0007 | 0.0005 | 0.0007 | 0.018 | 0.019 | 0.024 | tr. | 4.7 |
| U | 0.0026 | 3.95 | 0.23 | 0.010 | 0.0010 | 0.77 | 0.0020 | 0.0010 | 0.0006 | 0.0004 | 0.0007 | 0.018 | 0.018 | 0.025 | tr. | 4.8 |
| v | 0.0011 | 3.81 | 0.41 | 0.008 | 0.0009 | 0.62 | 0.0032 | 0.0009 | 0.0042 | 0.0012 | 0.0015 | 0.153 | 0.203 | 0.015 | 0.002 | 4.6 |
| W | 0.0008 | 3.80 | 0.26 | 0.016 | 0.0007 | 0.71 | 0.0011 | 0.0036 | 0.0018 | 0.0012 | 0.0019 | 0.181 | 0.410 | 0.015 | tr. | 4.6 |

EP 4 495 275 A1

14

(continued)

| Steel | Chemical composition (mass%, balance: Fe and impurities) | | | | | | | | | | | | | | | Middle part value of Formula (i)† |
|---|---|---|---|---|---|---|---|---|---|---|---|---|---|---|---|---|
| | C | Si | Mn | P | S | Al | N | Ti | Nb | Zr | V | Cu | Ni | Sn | Sb | |
| X | 0.0025 | 3.95 | 0.25 | 0.015 | 0.0012 | <u>0.22</u> | 0.0015 | 0.0010 | 0.0009 | 0.0006 | 0.0008 | 0.017 | 0.020 | 0.024 | 0.001 | 4.3 |

† $4.2 \leq Si+Al+0.5 \times Mn \leq 4.9$ …(i)

"tr." indicates that value is measurement limit or lower.

Underline indicates that value is outside of range of the present invention.

[Table 2]

Table 2

| Test No. | Steel | Hot-band annealing soaking temperature (°C) | Final annealing soaking temperature (°C) | After final annealing | | | | | After stress relief annealing | | | | Remarks |
|---|---|---|---|---|---|---|---|---|---|---|---|---|---|
| | | | | [N]s (mass%) | Average crystal grain size (μm) | Tensile strength (MPa) | $W_{10/400}$ (W/kg) | Bs (T) | [N]s (mass%) | Average crystal grain size (μm) | $W_{10/400}$ (W/kg) | Bs (T) | |
| 1 | A | 750 | 750 | 0.0024 | 12 | 698 | 21.5 | 1.979 | 0.0043 | 45 | 10.7 | 1.979 | Comparative example |
| 2 | B | 750 | 750 | 0.0022 | 13 | 693 | 19.0 | 1.977 | 0.0045 | 60 | 9.4 | 1.977 | Inventive example |
| 3 | C | 750 | 750 | 0.0021 | 14 | 698 | 18.6 | 1.974 | 0.0041 | 62 | 9.1 | 1.974 | Inventive example |
| 4 | D | 750 | 750 | 0.0020 | 12 | 711 | 21.8 | 1.974 | 0.0044 | 43 | 11.0 | 1.974 | Comparative example |
| 5 | E | 710 | 750 | 0.0065 | 13 | 745 | 20.5 | 1.954 | 0.0080 | 64 | 10.8 | 1.960 | Comparative example |
| 6 | F | 710 | 750 | 0.0030 | 14 | 739 | 18.7 | 1.954 | 0.0056 | 71 | 9.0 | 1.959 | Inventive example |
| 7 | G | 710 | 750 | 0.0035 | 15 | 734 | 18.1 | 1.954 | 0.0040 | 78 | 8.8 | 1.954 | Inventive example |
| 8 | H | 710 | | Fracture during cold rolling | | | | | Fracture during cold rolling | | | | Comparative example |
| 9 | I | 730 | 750 | 0.0045 | 15 | 735 | 18.0 | 1.951 | 0.0052 | 80 | 8.6 | 1.957 | Inventive example |
| 10 | J | 730 | 750 | 0.0061 | 14 | 741 | 20.3 | 1.949 | 0.0074 | 83 | 10.7 | 1.954 | Comparative example |
| 11 | K | 680 | 780 | 0.0044 | 19 | 748 | 16.8 | 1.951 | 0.0053 | 82 | 8.5 | 1.951 | Inventive example |
| 12 | L | 680 | 780 | 0.0048 | 18 | 756 | 17.0 | 1.943 | 0.0056 | 80 | 8.8 | 1.943 | Comparative example |
| 13 | M | 680 | | Fracture during cold rolling | | | | | | | | | Comparative example |

| Test No. | Steel | Hot-band annealing soaking temperature (°C) | Final annealing soaking temperature (°C) | After final annealing | | | | | After stress relief annealing | | | | Remarks |
|---|---|---|---|---|---|---|---|---|---|---|---|---|---|
| | | | | [N]s (mass%) | Average crystal grain size (μm) | Tensile strength (MPa) | $W_{10/400}$ (W/kg) | Bs (T) | [N]s (mass%) | Average crystal grain size (μm) | $W_{10/400}$ (W/kg) | Bs (T) | |
| 14 | N | 820 | Fracture during cold rolling | | | | | | | | | | Comparative example |
| 15 | N | 780 | 730 | 0.0028 | 12 | 724 | 19.3 | 1.968 | 0.0040 | 61 | 9.5 | 1.965 | Inventive example |
| 16 | N | 750 | 730 | 0.0027 | 11 | 732 | 19.5 | 1.968 | 0.0039 | 57 | 9.4 | 1.965 | Inventive example |
| 17 | N | 700 | 730 | 0.0025 | 10 | 740 | 19.8 | 1.968 | 0.0038 | 53 | 9.6 | 1.965 | Inventive example |
| 18 | N | 640 | 730 | 0.0024 | 9 | 750 | 21.5 | 1.968 | 0.0039 | 48 | 10.2 | 1.965 | Comparative example |
| 19 | O | 700 | 680 | 0.0021 | 8 | 782 | 23.3 | 1.959 | 0.0059 | 61 | 9.8 | 1.970 | Comparative example |
| 20 | O | 700 | 700 | 0.0023 | 10 | 760 | 19.9 | 1.959 | 0.0061 | 64 | 9.2 | 1.970 | Inventive example |
| 21 | O | 700 | 820 | 0.0046 | 25 | 692 | 17.2 | 1.959 | 0.0059 | 75 | 8.8 | 1.970 | Inventive example |
| 22 | O | 700 | 860 | 0.0048 | 34 | 675 | 16.3 | 1.959 | 0.0079 | 70 | 9.3 | 1.970 | Comparative example |
| 23 | P | 750 | 750 | 0.0030 | 14 | 677 | 19.2 | 1.978 | 0.0035 | 75 | 9.6 | 1.978 | Comparative example |
| 24 | Q | 750 | 750 | 0.0032 | 14 | 684 | 21.2 | 1.982 | 0.0040 | 72 | 10.2 | 1.982 | Comparative example |
| 25 | R | 720 | 750 | 0.0035 | 13 | 708 | 20.3 | 1.977 | 0.0040 | 45 | 10.6 | 1.977 | Comparative example |
| 26 | S | 720 | 750 | 0.0036 | 14 | 706 | 18.0 | 1.969 | 0.0048 | 65 | 9.3 | 1.968 | Inventive example |

EP 4 495 275 A1

(continued)

| Test No. | Steel | Hot-band annealing soaking temperature (°C) | Final annealing soaking temperature (°C) | After final annealing | | | | | After stress relief annealing | | | | Remarks |
|---|---|---|---|---|---|---|---|---|---|---|---|---|---|
| | | | | [N]s (mass%) | Average crystal grain size ($\mu$m) | Tensile strength (MPa) | $W_{10/400}$ (W/kg) | Bs (T) | [N]s (mass%) | Average crystal grain size ($\mu$m) | $W_{10/400}$ (W/kg) | Bs (T) | |
| 27 | T | 720 | 750 | 0.0038 | 15 | 709 | 16.7 | 1.955 | 0.0054 | 75 | 8.9 | 1.954 | Inventive example |
| 28 | U | 720 | Fracture during cold rolling | | | | | | | | | | Comparative example |
| 29 | V | 740 | 770 | 0.0042 | 15 | 705 | 17.5 | 1.953 | 0.0052 | 69 | 8.9 | 1.953 | Inventive example |
| 30 | W | 740 | 770 | 0.0044 | 14 | 707 | 17.8 | 1.950 | 0.0055 | 65 | 9.0 | 1.951 | Inventive example |
| 31 | W | 800 | Fracture during cold rolling | | | | | | | | | | Comparative example |
| 32 | X | 720 | 730 | 0.0020 | 11 | 718 | 20.5 | 1.975 | 0.0041 | 51 | 10.5 | 1.975 | Comparative example |

Underline indicates that value is outside of range of the present invention.

**EP 4 495 275 A1**

The average crystal grain size of each sample, both after final annealing and after stress-relief annealing, was measured in the cross section parallel to the rolling direction of the base metal according to JIS G 0551: 2013 "Steel - Microscopic test method for grain size". In addition, Epstein test specimens were taken from the rolling direction and the width direction of each sample final annealing, and the iron loss $W_{10/400}$ was evaluated by the Epstein test according to JIS C 2550-1:2011. Evaluation of iron loss $W_{10/400}$ after stress-relief annealing was performed on Epstein test specimens taken from each test specimen after final annealing and then subjected to stress-relief annealing. The saturation magnetic flux density was measured using a vibrating sample magnetometer (VSM).

Then, JIS No. 5 tensile test specimens in accordance with JIS Z 2241:2011 were taken from each sample that had been final annealed so that the longitudinal direction matched the rolling direction of the steel sheet. The above test specimens were then subjected to a tensile test in accordance with JIS Z 2241:2011 to measure tensile strength.

In addition, [N]s denoting an N content from the surface of the base metal to 20 $\mu$m in the depth direction of each sample after final annealing or after stress relief annealing was measured by the following procedure. First, $[N]_1$ denoting the N content of the sample was measured after the insulation coating was removed by heated alkaline solution. Then, both surfaces of the sample were removed by chemical polishing, 20 $\mu$m each, and $[N]_2$ denoting an N content of the sample after removal was measured. Then, the [N]s was obtained from the measured $[N]_1$ and $[N]_2$ and the thickness t ($\mu$m) of the sample using the following formula.

$$[N]s = (t \times [N]_1 - (t-40) \times [N]_2)/40$$

The above results are also shown in Table 2.

Test Nos. 2, 3, 6, 7, 9, 11, 15 to 17, 20, 21, 26, 27, 29 and 30, which satisfy the requirements of the present invention, have low iron loss after final annealing, high saturation flux density, and high tensile strength above 680 MPa, and also have low iron loss after stress relief annealing.

In contrast, the comparative examples, Test Nos. 1, 4, 5, 8, 10, 12 to 14, 18, 19, 22 to 25, 28, 31, and 32, had either inferior iron loss $W_{10/400}$, inferior saturation magnetic flux density, or significantly reduced toughness which made them difficult to produce.

Specifically, in Test No. 1, the Mn content was lower than the specified range, resulting in inferior iron loss due to a large amount of fine MnS precipitates. In Test No. 4, the S content was more than the specified range, resulting in inferior iron loss due to a **large amount** of fine MnS precipitates. In Test No. 5, the Sn content was lower than the specified range, resulting in higher [N]s and inferior iron loss. In Test No. 8, the Sn content was more than the specified range, which reduced the toughness and resulted in fracture during cold rolling, making it impossible to measure the tensile strength and magnetic properties.

In Test No. 10, the Mn content was more than the specified range, resulting in higher [N]s and inferior iron loss. In Test No. 12, the saturation magnetic flux density was inferior because Si + Al + 0.5 $\times$ Mn was more than the specified range. In Test No. 13, the Si content and Si + Al + 0.5 $\times$ Mn were more than the specified ranges, and the toughness deteriorated, resulting in fracture during cold rolling and making it impossible to measure the tensile strength and magnetic properties.

In Test No. 14, the hot-band annealing temperature was higher than the specified range, resulting in toughness degradation and fracture during cold rolling and making it impossible to measure the tensile strength and magnetic properties. In Test No. 18, the hot-band annealing temperature was lower than the specified range, resulting in a smaller average crystal grain size and inferior iron loss, both after final annealing and after stress relief annealing. In Test No. 19, the final annealing temperature was lower than the specified range, and the average crystal grain size after final annealing was smaller than the specified range, resulting in inferior iron loss after final annealing. In Test No. 22, the final annealing temperature was higher than the specified range, resulting in inferior tensile strength.

In Test No. 23, the Si content was lower than the specified range, resulting in inferior tensile strength. In Test No. 24, Si + Al + 0.5 $\times$ Mn was lower than the specified range, resulting in inferior iron loss both after final annealing and after stress relief annealing. In addition, in Test No. 25, the Al content was lower than the specified range, which resulted in inferior iron loss after final annealing due to micro-precipitates of AlN, and also resulted in inferior iron loss after stress relief annealing due to small average crystal grain size thereof. In Test No. 28, the Al content was more than the specified range, which resulted in reduced toughness and fracture during cold rolling, and made it impossible to measure the tensile strength and magnetic properties.

In Test No. 31, the soaking temperature of the hot-band annealing process was higher than the specified range, and the toughness deteriorated due to coarsening of the crystal grain size, resulting in fracture during cold rolling, making it impossible to measure the tensile strength and magnetic properties. In Test No. 32, the Al content was lower than the specified range, resulting in a deterioration of the texture and the precipitation of fine AlN, which worsened the iron loss after final annealing as well as after stress relief annealing.

20

INDUSTRIAL APPLICABILITY

As described above, according to the present invention, a non-oriented electrical steel sheet with high strength and excellent magnetic properties can be obtained at low cost.

**Claims**

**1.** A non-oriented electrical steel sheet comprising a base metal having a chemical composition containing, by mass %:

C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:

$[N]s$, an N content from a surface to 20 $\mu$m in depth of the base metal, is 0.0060% or less,
an average crystal grain size of the base metal is 10 to 30 $\mu$m,
an iron loss $W_{10/400}$ is 20.0 W/kg or less,
a saturation magnetic flux density is 1.945T or more,
a tensile strength is 680 MPa or more, and
a sheet thickness is 0.10 to 0.30 mm:

$$4.2 \leq Si + Al + 0.5 \times Mn \leq 4.9 \ \ldots\ldots (i)$$

where, element symbols in the above Formula (i) represents contents (by mass %) of each element.

**2.** The non-oriented electrical steel sheet according to claim 1, wherein the steel sheet comprises an insulation coating on a surface of the base metal.

**3.** A method of producing a non-oriented electrical steel sheet described in claim 1 or claim 2,
the method including:

a hot rolling process,
a pickling process,
a batch-type hot-band annealing process performed at a soaking temperature of 650 to 780°C for a soaking time of 8 to 36 hours,
a cold rolling process to reduce a sheet thickness to 0.10 to 0.30 mm, and
a final annealing process at a soaking temperature of 700 to 830°C for a soaking time of 1 second to 10 minutes,
wherein the hot rolling process, the pickling process, the hot-band annealing process, the cold rolling process, and the final-annealing process are sequentially performed on a steel ingot having a chemical composition containing, by mass %,
C: 0.0050% or less,
Si: more than 3.70% and 4.60% or less,
Mn: more than 0.20% and 0.50% or less,

Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below:

$$4.2 \leq Si + Al + 0.5 \times Mn \leq 4.9 \ldots\ldots (i)$$

where, element symbols in the above Formula (i) represents contents (by mass %) of each element.

4. A motor core comprising a plurality of laminated non-oriented electrical steel sheets,

wherein the chemical composition of the base metal of the non-oriented electrical steel sheet containing, by mass %,
C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:

[N]s, an N content from a surface to 20 $\mu$m in depth of the base metal, is 0.0070% or less,
an average crystal grain size of the base metal is 50 to 120 $\mu$m,
a saturation magnetic flux density is 1.945 T or more,
a sheet thickness of the non-oriented electrical steel sheet is 0.10 to 0.30 mm:

$$4.2 \leq Si + Al + 0.5 \times Mn \leq 4.9 \ldots\ldots (i)$$

where, element symbols in the above Formula (i) represents contents (by mass %) of each element.

5. The motor core according to claim 4, wherein the non-oriented electrical steel sheet comprises an insulation coating on a surface of the base metal of the non-oriented electrical steel sheet.

6. A method for producing a motor core described in claim 4 or claim 5,
the method including:

a hot rolling process,

a pickling process,

a batch type hot-band annealing process performed at a soaking temperature of 650 to 780°C for a soaking time of 8 to 36 hours,

a cold rolling process to reduce the sheet thickness to 0.10 to 0.30 mm,

a final annealing process at a soaking temperature of 700 to 830°C for a soaking time of 1 second to 10 minutes,

a punching process,

a stacking process,

a stress relief annealing process at a soaking temperature of 750 to 900°C for 10 to 180 minutes,

wherein the hot rolling process, the pickling process, the hot-band annealing process, the cold rolling process, the final-annealing process, the punching process, the stacking process, and the stress relief annealing process are sequentially performed on a steel ingot having a chemical composition containing, by mass %,

C: 0.0050% or less,

Si: more than 3.70% and 4.60% or less,

Mn: more than 0.20% and 0.50% or less,

Al: 0.23 to 0.75%,

P: 0.030% or less,

S: 0.0018% or less,

N: 0.0040% or less,

Ti: less than 0.0050%,

Nb: less than 0.0050%,

Zr: less than 0.0050%,

V: less than 0.0050%,

Cu: less than 0.200%,

Ni: less than 0.500%,

Sn: 0.005 to 0.040%, and

Sb: 0 to 0.040%,

with a balance of Fe and impurities, and

satisfying the Formula (i) below:

$$4.2 \leq \mathrm{Si} + \mathrm{Al} + 0.5 \times \mathrm{Mn} \leq 4.9 \dots\dots \text{(i)}$$

where, element symbols in the above Formula (i) represents contents (by mass %) of each element.

| INTERNATIONAL SEARCH REPORT | International application No. |
|---|---|
| | **PCT/JP2023/009982** |

**A. CLASSIFICATION OF SUBJECT MATTER**

***C21D 8/12***(2006.01)i; ***H02K 15/02***(2006.01)i; ***C22C 38/00***(2006.01)i; ***C22C 38/60***(2006.01)i; ***H01F 1/147***(2006.01)i;
***H02K 1/02***(2006.01)i; ***H02K 1/04***(2006.01)i
FI: C22C38/00 303U; C22C38/60; C21D8/12 A; H02K1/02 Z; H02K1/04 Z; H02K15/02 D; H02K15/02 H; H01F1/147 183

According to International Patent Classification (IPC) or to both national classification and IPC

**B. FIELDS SEARCHED**

Minimum documentation searched (classification system followed by classification symbols)

C21D8/12; C21D9/46; H02K15/02; C22C38/00-C22C38/60; H01F1/147; H02K1/02; H02K1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/262063 A1 (JFE STEEL CORPORATION) 30 December 2020 (2020-12-30) claims, paragraphs [0010], [0022], [0071], [0075]-[0076], tables 6-1, 7-1, steel no. 20 | 1-6 |
| A | WO 2020/166718 A1 (NIPPON STEEL CORPORATION) 20 August 2020 (2020-08-20) entire text, all drawings | 1-6 |
| A | WO 2018/025941 A1 (NIPPON STEEL & SUMITOMO METAL CORPORATION) 08 February 2018 (2018-02-08) entire text, all drawings | 1-6 |
| A | JP 2011-246810 A (JFE STEEL CORPORATION) 08 December 2011 (2011-12-08) entire text, all drawings | 1-6 |
| A | JP 2000-256751 A (NKK CORPORATION) 19 September 2000 (2000-09-19) entire text, all drawings | 1-6 |
| A | KR 10-2021-0079545 A (POSCO) 30 June 2021 (2021-06-30) entire text, all drawings | 1-6 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/009982**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | KR 10-2021-0080726 A (POSCO) 01 July 2021 (2021-07-01)<br>entire text, all drawings | 1-6 |

Form PCT/ISA/210 (second sheet) (January 2015)

**INTERNATIONAL SEARCH REPORT**
**Information on patent family members**

International application No.

**PCT/JP2023/009982**

| Patent document cited in search report | | | Publication date (day/month/year) | Patent family member(s) | | | Publication date (day/month/year) |
|---|---|---|---|---|---|---|---|
| WO | 2020/262063 | A1 | 30 December 2020 | US 2022/0278566 A1 claims, paragraphs [0011], [0040], [0131]-[0135], tables 6, 7, steel no. 20 EP 3992312 A1 TW 202104613 A KR 10-2022-0004221 A CN 114008224 A CA 3137623 A1 | | | |
| WO | 2020/166718 | A1 | 20 August 2020 | US 2022/0186330 A1 entire text, all drawings EP 3926060 A1 TW 202035710 A KR 10-2021-0112365 A CN 113474472 A | | | |
| WO | 2018/025941 | A1 | 08 February 2018 | US 2019/0228891 A1 entire text, all drawings EP 3495525 A1 TW 201812051 A KR 10-2019-0003783 A CN 109563583 A BR 112018075826 A2 PL 3495525 T3 RS 63177 B1 | | | |
| JP | 2011-246810 | A | 08 December 2011 | (Family: none) | | | |
| JP | 2000-256751 | A | 19 September 2000 | (Family: none) | | | |
| KR | 10-2021-0079545 | A | 30 June 2021 | US 2023/0021153 A1 entire text, all drawings JP 2023-507436 A WO 2021/125683 A2 EP 4079889 A2 CN 115003844 A | | | |
| KR | 10-2021-0080726 | A | 01 July 2021 | US 2023/0025678 A1 entire text, all drawings JP 2023-507777 A WO 2021/125855 A2 EP 4079887 A2 CN 115176044 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019017426 A
- WO 2020091039 A
- WO 2020091043 A
- JP 2008050686 A